# EUROPEAN PATENT SPECIFICATION

(11) **EP 1 817 203 B1**
(45) Date of publication and mention of the grant of the patent: **04.05.2016**
(21) Application number: 04822409.1
(22) Date of filing: 09.11.2004
(51) Int. Cl.: B60N 3/02

(54) **AUXILIARY-HANDLE FIXING CLIP FOR MODULAR HEADLINER OF AUTOMOBILE**
BEFESTIGUNGSKLAMMER MIT ZUSATZGRIFF FÜR MODULAREN DACHHIMMEL EINES FAHRZEUGS
CLIP DE FIXATION POUR MANCHE AUXILIAIRE DE LA GARNITURE DE TOIT D'UNE AUTOMOBILE

(43) Date of publication of application: 15.08.2007
(73) Proprietor: Daehan Solution Co., Ltd., Namdong-gu Incheon 405-100 (KR)
(72) Inventor: KWON, Hoe Hyun, Youngdungpo-gu, Seoul 150-010 (KR)
(74) Representative: Raimondi, Adriana
(86) International application number: PCT/KR2004/002913
(87) International publication number: WO 2006/052038

(56) References cited:
- JP-A- 10 338 030
- JP-A- 10 338 030
- JP-A- 2001 065 524
- JP-A- 2001 065 524
- JP-A- 2001 206 127
- JP-A- 2001 206 127
- KR-A- 970 064 867
- KR-A- 970 064 867
- KR-A-020050 005 573
- KR-U- 19980 031 243
- KR-U- 19980 031 243
- US-A1- 2013 202 350
- US-B1- 6 179 366

## Description

### FIELD OF THE INVENTION

The present invention relates to an auxiliary handle clip for modular headliner of an automobile and more particularly to an auxiliary handle clip for modular headliner of an automobile, which can improve the strength of the product clip and which can have a firm and stable supporting capability under a horizontally acting external force (see, for example, US 6,179,366 B1, corresponding to the preamble of claim 1).

### BACKGROUND OF THE INVENTION

Generally, several auxiliary handles are provided on the top areas of the both sides in the interior of an automobile so that passengers may grip them, wherein the clips of auxiliary handles are positioned under the headliner and connected to the body panel of the automobile to be fixed.

Thus, conventionally auxiliary handles were screw-fastened to the headliners individually after the latter were mounted inside a car by the car manufacturer. However, because such a method inflicted the burden of increasing the assembling processes to the car manufacturer, in recent years the modular process is adapted, in which the car manufacturer installs the auxiliary handles to the body panels in one touch manner after they were supplied in such a pre-assembled state that the handles were temporarily attached to the headliners beforehand in a cooperating company.

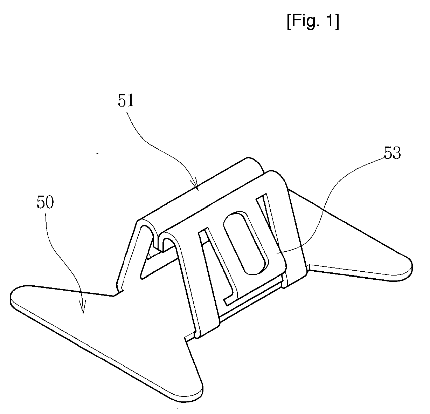

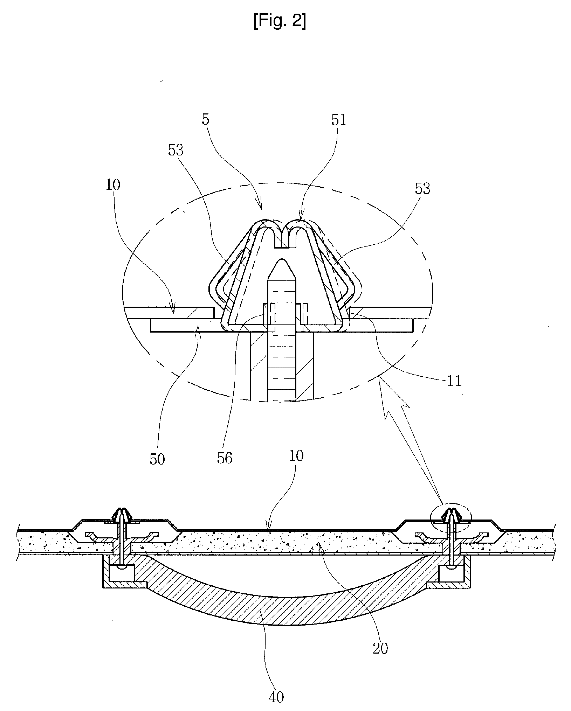

A representative auxiliary handle clip used in such a modular method is formed by bending a metal plate cutout in a predetermined form, as shown in Figs. 1 and 2, wherein a base 50 in a plate form is provided in the bottom and in its forward section, there is provided a hook 51 in wedge form, which is bent forward integrally from the base and is fitted in the coupling opening 11 of a body panel 10. In the center of the base 50, a clamping hole 56, which is intended for screw-clamping with an auxiliary handle 40, is formed, and in the middle area of the hook 31, supporting pieces 53 which are split in a U form and are spread out on both sides as they go down the base. Thus, when the hook 51 is inserted from under into the coupling opening 11 of a body panel 10, the above-described supporting pieces 53, while shrunk, are combined in the coupling opening 11 of a body panel 10. Thereafter, the supporting pieces 53 are expanded in both lateral directions due to their own elasticity, and caught on the body panel 10 to be fixed.

Incidentally, the fixing clip for supporting an auxiliary handle 40 for automobile should have enough supporting or reacting force for not only a vertical but also horizontal force, because the handle is pulled in different directions depending on the travelling state of a car, the sitting posture of a passenger or the like. However, conventional fixing clips have the disadvantage that the clip is apt to be slid easily under a horizontally acting force, as shown as dotted lines in Fig. 2, although it can exert a sufficient supporting force for a vertical force, because the supporting pieces 53 to engage with the body panel 10 are not supported securely inside the coupling opening 11 of the body panel 10 after their insertion, but they merely contact the external surface of the body panel 10. Further, because the supporting pieces 53 are formed only on the both lateral sides around the center of the hook 51, there is a problem of further weakened support with regard to a horizontal force in the forward and rearward direction.

Additionally, the length of a hook 51 in the forward and rearward direction should exceed that of a coupling opening 11 in order that the front portion of a hook 51 may be easily inserted in the coupling opening 11 of a body panel 10 for assembling. However, in that case, because the assembled fixing clip is apt to be moved easily in the forward and rearward direction in the coupling opening 11, the auxiliary handle 40 connected to this fixing clip cannot be supported firmly.

In addition, the fixing clip is formed with a burring-machined clamping hole 56 at the center of the base 50, wherein the auxiliary handle 40 is screw-clamped in the clamping hole 56. Therefore the central part of the base 50 around the hole 56 gets bulged downward when the handle 40 is pulled by a passenger. Although the upwardly bent hook 51 is provided on the opposite lateral sides of the clamping hole 56 in the fixing clip so as to prevent warp, the supporting power of the fixing clip is considerably decreased as the front and rear peripheries of the clamping hole 56 are sagged downward, on the ground that no supporting members against a vertical force are provided at the front and rear parts of the clamping hole 56.

Furthermore, there is another problem of reduced supporting power in that the cross sectional area of the supporting pieces 53 is limited to only a part of the whole cross sectional area of the hook 51, because such a conventional fixing clip is formed by cutting the central parts of both flanks of a hook 51 made of thin steel sheet from the hook, in the form of U, and then spreading-out the cut parts at their bottoms, to yield two supporting pieces 53. The horizontally farthest part from the lower end of a supporting piece 53 in engagement with the body panel 10, that is, the top end of the supporting piece 53 undergoes the largest bending moment when the auxiliary handle 40 is pulled. Incidentally, because the cross sections at the top portions of the supporting pieces 53 are only limited to a part of the whole cross sectional area of the hook 51, there is a problem of severe weakness to a bending moment.

JP 2001065524, JP 10338030, JP 2001206127 describe further known fixing clips that do not necessarily solve the problems highlighted in the above.

### DETAILED DESCRIPTION OF THE INVENTION

To resolve the above-described problems, the present invention is intended to provide an auxiliary handle clip for modular headliner of an automobile, which has an improved strength and which can have a firm and stable supporting capability under a horizontally acting external force.

According to the invention as defined in claim 1, there is provided an auxiliary handle fixing clip for module liner of an automobile comprising a base 31 at the bottom, the base being assembled between a body panel 10 and a headliner 20 of an automobile, and a hook 33 at the front, the hook 33 integrally bent from the base 31 for fitting in a coupling opening 11 of a body panel 10, wherein the hook 33 comprises inner walls 34 bent upwardly slantly in the direction of facing each other, starting from the opposite lateral sides of a base 31, outer walls 36 bent slantly downwardly in the direction of spreading from each other, starting from the both tops of the inner walls 34, and engaging members 38 bent slantly downwardly in mutually facing directions from the lower ends of the outer walls 36.

The inner walls 34 are formed at their lower parts with cut-out openings 35 having each a given area, at the positions corresponding to which openings the engaging members 38 are formed at the lower ends of outer walls 36, so that the engaging members 38 can be, with shrunk posture, easily fitted in the coupling opening 11 of the body panel 10, without interfering with inner walls 34, at the time of inserting the fixing clip in the coupling opening 11.

The supporting tongues 38 are bent downward from the lower ends of the engaging members 38 so as to be caught on the peripheral surface of a coupling opening 11 of the body panel 10.

The engaging members 38 are formed with longitudinal beading grooves 39.

In the base 31, movement stoppers 32 are disposed at the front and rear positions of the hook 33 respectively, to be caught on the inner wall surface of the coupling opening 11 of a body panel 10 at the time of assembling, and guiding parts 32a bent slantly in the mutually facing direction are formed in the upper parts of the movement stoppers 32, so as to guide the hook 33 in a given position in the coupling opening 11 also at the time of assembling.

According to another embodiment not forming part of the invention and known, for example, from the above-mentioned US 6,179,366 B1, there is provided an auxiliary handle fixing clip for module liner of an automobile comprising a base 31 at the bottom, the base being assembled between a body panel 10 and a headliner 20 of an automobile, and a hook 33 at the front, the hook 33 integrally bent from the base 31 for fitting in a coupling opening 11 of the body panel 10, wherein the hook 33 comprises connecting members 34a extending upwardly slantly in the direction of facing each other to overlap with each other in the top, starting from the opposite lateral sides of the base 31, two pairs of supporting members 36a having free ultimate bottom ends, the supporting members of each pair being provided at the front and rear positions of the connecting member 34a, vertical cuts 35a dividing the connecting members 34a and the supporting members 36a, the supporting members being downwardly slantly wide-spread from the both top sides, and engaging members 38a bent downwardly slantly in mutually facing direction from the lower boundaries of the supporting members 36a ultimately to have free ends.

The supporting members 36a and engaging members 38a are respectively formed with longitudinal beading grooves 39.

In the base 31, movement stoppers 32 are disposed at the front and rear positions of the hook 33 respectively, to be caught on the inner wall surface of the coupling opening 11 of a body panel 10 at the time of assembling, and guiding parts 32a bent slantly in the mutually facing direction are formed in the upper parts of the movement stoppers 32, so as to guide the hook 33 in a given position in the coupling opening 11 also at the time of assembling.

### BRIEF DESCRIPTION OF THE DRAWINGS

Figure 1 shows the perspective view of a conventional illustrative fixing clip for an auxiliary handle in an automobile,
Figure 2 shows the view in cross section, illustrating installation of a conventional fixing clip,
Figure 3 shows the perspective view of a handle fixing clip according to the first embodiment of the invention,
Figure 4 shows the exploded perspective view, illustrating the assembling of the fixing clip in Figure 3,
Figure 5 shows the view in cross section, illustrating the assembled fixing clip in Figure 3,
Figure 6 shows the perspective view of a handle fixing clip according to the second embodiment not forming part of the invention,
Figure 7 shows the exploded perspective view, illustrating the assembling of the fixing clip in Figure 6 (not forming part of the invention),
Figure 8 shows the view in cross section, illustrating the assembled fixing clip in Figure 6.

### THE PREFERRED EMBODIMENT OF THE INVENTION

A preferred embodiment of the invention is described in detail below with regard to preferred embodiments taken in conjunction with the accompanying drawings.

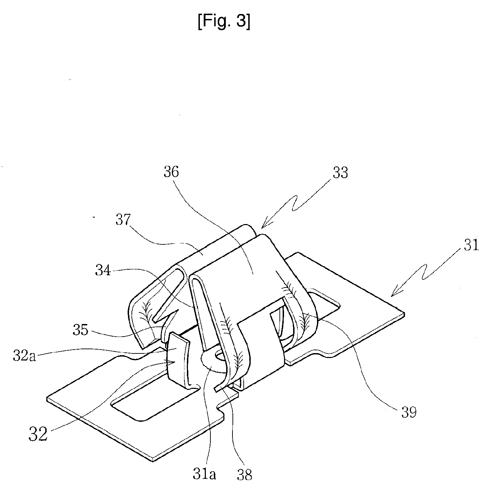

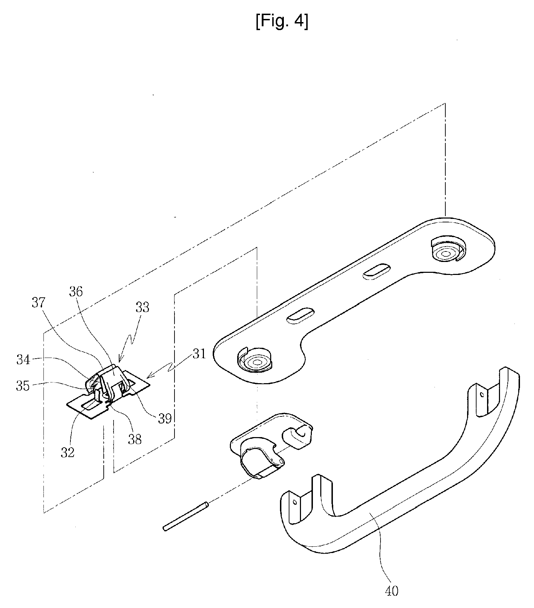

Referring to Figs. 3 to 5, showing perspective and cross sectional views respectively of a fixing clip of an auxiliary handle according to the preferred embodiment of the invention, the fixing clip consists of a base 31 in a flat plate form and a hook 33 in a wedge form, as in the conventional case, but it is seen in the present invention that the hook 33 comprises inner walls 34 bent upwardly slantly in the direction of facing each other, starting from the opposite lateral sides of a base 31, outer walls 36 bent slantly downwardly to spread from each other, starting from the both tops of the inner walls 34 and engaging members 38 bent slantly downwardly in mutually facing directions from the lower ends of the outer walls 36.

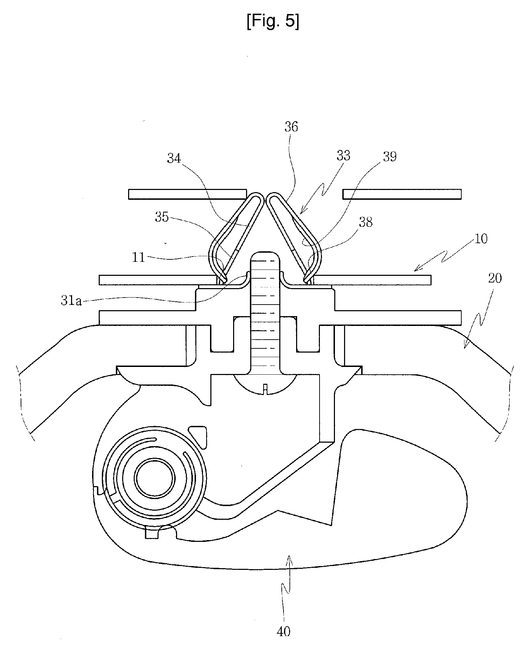

The base 31, formed from a flat plate, extends by predetermined lengths forward and rearward beyond the hook 33 so that these extended parts may contact the inner surfaces of a body panel 10 of an automobile to be supported, at the time of assembling. In the central portion of the base 31, a clamping hole 31a is formed so as to be connected to an auxiliary handle 40 by means of a screw therein, as seen in Fig. 5. Further, in this base 31, a pair of movement stoppers 32 are disposed at the front and rear positions of the hook 33, wherein the movement stoppers 32 are formed by cutting out the base 31 in a U-form, the resulting cuts being bent upward, with the result that the stoppers 32 can be brought into tight contact with the inner wall surface of the coupling opening 11 of the body panel 10 at the time of assembling, so as to support the fixing clip in an immovable manner in the forward and rearward direction. Particularly, the movement stoppers 32 are each inclined at a given angle at the upper part of the stoppers in the mutually facing directions. Accordingly the stoppers also play the role of so guiding the fixing clip, that the fixing clip may be mounted in the coupling opening 11 of the body panel 10 at a correct position.

The hook 33 comprises wedge-formed inner walls 34a bent upwardly slantly in the direction of facing each other, starting from the opposite lateral sides of a base 31, outer walls 36 bent slantly downwardly to spread from each other, starting from the both tops of the inner walls 34, engaging members 38 bent slantly downwardly in mutually facing directions from the lower ends of the outer walls 36, and supporting tongues which are bent downward from the lower boundaries of the engaging members 38 and caught on the peripheral surface of the coupling opening 11 of the body panel 10. Hereupon, the inner walls 34 are formed at their lower parts with cut-out openings 35 having each a given area, at the positions corresponding to which openings the engaging members 38 are formed at the lower ends of outer walls 36, so that the engaging members 38 can be, with shrunk posture, easily fitted in the coupling opening, without interfering with inner walls 34, at the time of inserting the fixing clip in the coupling openings 11 of the body panel 10. The engaging members 38 are formed with longitudinal beading grooves 39, extending upward up to the middle positions of the outer walls 36 so as to have a sufficient strength, even if the widths of the engaging members 38 are formed narrow enough to correspond to the openings 35.

According to the first embodiment of the invention described above, when the fixing clip is inserted, with its front hook 33, into the coupling opening 11 of the body panel 10, the outer walls 36 at both lateral outsides of the hook 33 are inserted in the coupling opening 11, shrinking in mutually facing direction and tightly contacting with the inner wall surface of the coupling opening 11. After complete insertion in the coupling opening, the outer walls 36 are elastically restored, or spread outward, so that the lower engaging members 38 may contact the outer surface of the body panel 10 and the supporting tongues are engaged on the peripheral surface of the coupling opening 11, whereby strong fixing not only in vertical but also in horizontal directions is ensured.

Even if the both engaging members 38 bent down inwardly from the bottoms of the outer walls 36 are elastically deformed to face each other in the course of assembling, these members 38 are prevented from interfering with the inner walls 34 thanks to the openings 35 correspondingly positioned, so that a smooth insertion in the coupling opening 11 is made possible under elastic deformation. Although the inner walls 34 are reduced in their widths due to the openings 35, they can exert enough supporting force because their general vertical disposition can withstand a vertically pulled force.

The horizontally farthest positions from the engaging members 38 in contact with the body panel 10, that is, the top bent parts 37 in transition from the inner walls 34 to the outer walls 36 are exposed to the largest moments when an auxiliary handle 40 is pulled. In this regard, because the bent parts 37 are formed with the full width of a hook 33 in this embodiment, this large cross sections of the bent parts 37 are optimally fitted to bending moments.

Further, although the engaging members 38 below the outer walls 36 correspond to one of relatively weak parts which undergo small bending moments but simultaneously are narrow in the width, the engaging members 38 are reinforced by vertical beading grooves 39, formed along the central lines, to exert enough supporting force.

In this fixing clip, the engaging members 38 and supporting tongues in direct contact with the body panel 10 are disposed at the front and rear positions of both lateral sides around the hook 33, and therefor they are positioned uniformly apart from each other around the central part of the fixing clip connected to the auxiliarly handle 40, so that they are contacted and supported by the outer surface of the body panel 10 and the peripheral surface of the coupling opening 11. Accordingly, the fixing clip has the advantage that it is firmly supported under both the vertically and horizontally pulled forces depending on either the travelling condition of a car or the sitting posture of a passenger.

Besides, a pair of movement stoppers 32 bent upward from the base 31 are disposed at the front and rear positions of the hook 33 so as to secure the fixing clip in the forward and rearward direction through a tight contact of the stoppers 32 with the inner surface of the coupling opening 11 of the body panel 10.

Further, the fixing clip is provided with the hook 33 erected to the both sides of the clamping hole 31a connected to an auxiliary handle 40, and is further provided with the movement stoppers 32 bent upward from the base 31 at the front and rear positions of the clamping hole 31a, so that the hook 33 and movement stoppers 32 upwardly bent at the both lateral sides and the front and rear positions of the base 31 which is connected to an auxiliary handle 40 can deal with the vertically pulled force, even when the handle 40 is jerked strongly by a passenger, whereby warping at the base 31 is prevented and the supporting power of the fixing clip is also improved.

Additionally, as indicated in the above, the movement stoppers 32 are each inclined at a given angle at the upper part of them in the mutually facing direction to form inclined guiding parts 32a, and so the stoppers also play the role of so guiding the fixing clip, that the fixing clip may be mounted in the coupling opening 11 of the body panel 10 at a definite correct position, when the fixing clip is inserted in the coupling opening 11.

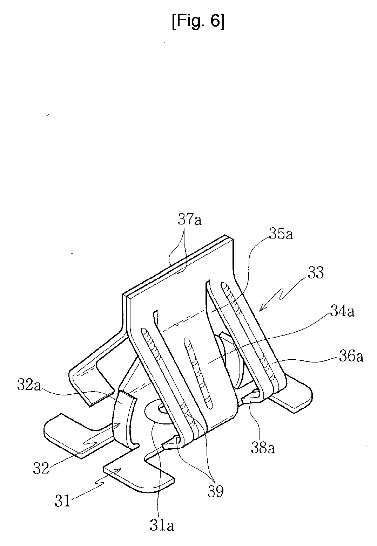

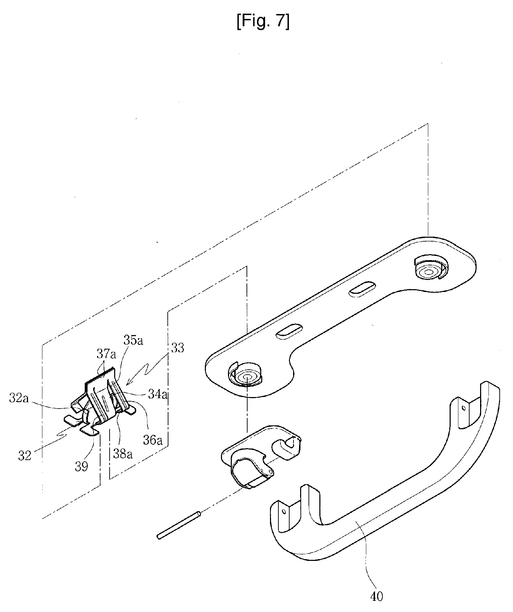

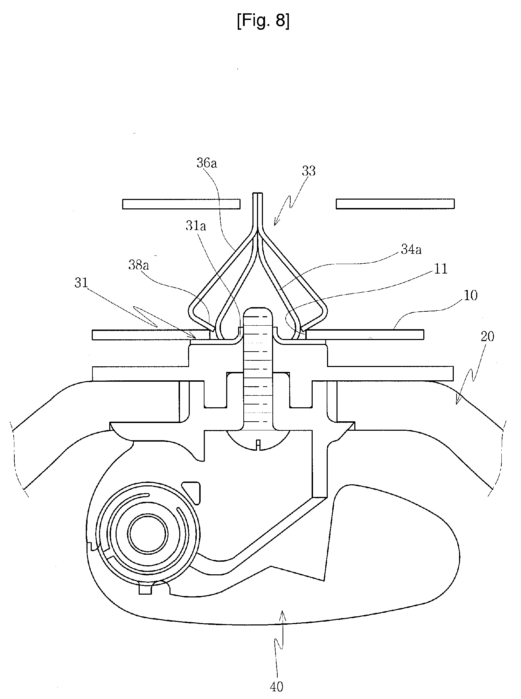

Referring now to Figs. 6 to 8, showing perspective and cross sectional views respectively of a fixing clip of an auxiliary handle according to the second embodiment not forming part of the invention, the fixing clip is integrally formed of a base 31 and a wedge-formed hook 33, just the same as in the conventional case, but in the present embodiment, the hook 33 comprises connecting members 34a bent upwardly slantly in the direction of facing each other, starting from the opposite lateral sides of the base 31, two pairs of supporting members 36a, the supporting members of each pair being provided at the front and rear positions of the connecting member 34a, vertical cuts 35a dividing the connecting members 34a and the supporting members 36a, the supporting members being downwardly slantly spread from the both top sides, and engaging members 38b downwardly slantly bent in mutually facing direction from the lowest positions of the supporting members 36a to have free ends, wherein the supporting members 36a and engaging members 38b are formed with longitudinal beading grooves 39 at their center lines for increased strength.

The description of the base 31 is omitted, because it would be similar to that of the first embodiment.

The connecting members 34a of the hook 33 are slantly bent upward in the direction of facing each other, starting from the opposite lateral positions of the base 31, and they meet each other in the top position, vertically extending to provide contacting supporting part 37a. Therefore, even if a supporting force acts in the direction opposite to a connecting member 34a, the bending is prevented due to the contacting supporting part 37a above the connecting member 34a.

A pair of supporting members 36a are provided at the front and rear of each connecting member 34a and are formed by longitudinally cutting the member 36a to have free ends, and spreading, at the bottom, the parts having free ends further out the remaining connecting member 34a. Such supporting members 36a are inserted from below in the coupling opening 11, while being deformed elastically, at the time of assembling the fixing clip in the coupling opening 11 of the body panel 10 and elastically restored after the complete insertion to thereby support the pulling force by an auxiliary handle 40.

The engaging members 38a with free ends on the opposite sides, which are bent slantly inwardly in the direction of facing each other from the lower ends of the supporting members 36a, function to tightly fix a fixing clip to the body panel 10 by interfering with the outside of the coupling opening 11 of the body panel 10. Further, longitudinal beading grooves 39 are formed on the center line of the supporting members 36a and engaging members 38a for reinforcement.

According to said second embodiment not forming part of the invention as described above, when the fixing clip is inserted, with its front hook 33, into the coupling opening 11 of a body panel 10, the supporting members 36a at both sides of the hook 33 are inserted in the coupling opening 11, shrinking in mutually facing direction and tightly contacting the inner wall surface of the coupling opening 11. After complete insertion in the coupling opening, the supporting members 36a are elastically restored, or spread outward, and the interference of the lower engaging members 38a with the outside of the body panel 10 ensures fixing. At this time, the supporting power of an auxiliary handle 40 is remarkably increased, because longitudinal beading grooves 39 are formed on the supporting members 36a and engaging members 38a.

In this fixing clip, the engaging members 38a in direct contact with the body panel 10 are formed at the front and rear lowest positions of the supporting members 36a, widely spread to both sides, besides the front and rear movement stoppers 32 and therefore those engaging and stopping members are positioned uniformly distributed around the central coupling opening 11 of the fixing clip, so that supporting power is ensured with regard to the pulled force in any direction. Accordingly, the fixing clip has the advantage that a general stable support is ensured, without weak parts, even if the moment at the time of pulling the handle 40 is oriented in any direction depending on the traveling condition of a car, the sitting posture of a passenger or the like.

Further, a pair of movement stoppers 32 bent upward from the base 31 are disposed at the front and rear positions of the hook 33 so as to secure the fixing clip in the forward and rearward direction through a tight contact of the stoppers 32 with the inner surface of the coupling opening 11 of a body panel 10. In addition, the fixing clip is provided with the hook 33 upwardly bent to the both sides of the clamping hole 31a connected to an auxiliary handle 40, and is further provided with the movement stoppers 32 bent upward from the base 31 at the front and rear positions of the clamping hole 31a, so that the hook 33 and movement stoppers 32 provided at the both lateral sides and the front and rear positions of the base 31 which is connected to the auxiliary handle 40 can withstand the vertically pulled force, even when the handle 40 is jerked hard by a passenger, whereby warping at the base 31 is prevented and the supporting power of the fixing clip is also improved.

### INDUSTRIAL APPLICABILITY

As described above, the present invention has the advantage that the inventive fixing clip, due to a number of engaging parts 38 and movement stoppers 32 uniformly distributed around the coupling opening for contacting and supporting a body panel 10, achieves the stable support, without generating a weak position, even under the moment from any direction. The areas of the base 31 in connection to an auxiliary handle 40 is prevented from bending, particularly due to the movement stoppers 32.

Besides, the top bending parts 37, on which the largest bending moment acts in the case of an external vertical force, for the first embodiment, are formed with large cross section corresponding to the full width of the hook 33, so that the strength of the product can be remarkably increased. In addition, the supporting tongues below the engaging parts 38 are caught on the peripheral surface 11a of the coupling opening, so that a much stronger support against a horizontal force is attained.

## Claims

1. An auxiliary handle-fixing clip for modular headliner of an automobile comprising a base (31) at the bottom, the base being adapted to be assembled between a body panel (10) and a headliner (20) of an automobile, and a hook (33) at the front, the hook (33) integrally bent from the base (31) for fitting in a coupling opening (11) of the body panel 10), the hook (33) comprising inner walls (34) bent upwardly slantly in the direction of facing each other, starting from the opposite lateral sides of the base (31), outer walls (36) bent slantly downwardly in the direction of dreading from each other, starting from the both tops of the inner walls (34), and engaging members (38) bent slantly downwardly in mutually facing directions from the lower ends of the outer walls (36), said clip being **characterised by** the inner walls (34) being formed at their lower parts with cut-out openings (35) having each a given area, at the positions corresponding to which openings the engaging members (38) are formed at the lower ends of outer walls (36), so that the engaging members (38) can be, with shrunk posture, easily fitted in the coupling opening (11) of the body panel (10), without interfering with inner walls (34), at the time of inserting the fixing clip in the coupling opening (11); additionally an opening being formed in each wall (36) in between the engaging members (38).

2. An auxiliary handle-fixing clip according to Claim 1, wherein the engaging members (38) are formed with longitudinal beading grooves (39).

3. An auxiliary handle-fixing clip according to claim 1 or 2, wherein in the base (31), movement stoppers (32) are disposed at the front and rear positions of the hook (33) respectively, to be caught on the inner wall surface of the coupling opening (11 of the body panel (10) at the time of assembling, and guiding parts (32a) bent slantly in the mutually facing direction are formed in the upper parts of the movement stoppers (32), so as to guide the hook (33) in a given position in the coupling opening (11) also at the time of assembling.

## Patentansprüche

1. Befestigungsklammer mit Zusatzgriff für modularen Dachhimmel eines Fahrzeuges aufweisend eine Basis (31) unten, wobei die Basis dazu ausgebildet ist, zwischen einem Karosserieblech (10) und einem Dachhimmel (20) eines Fahrzeuges montiert zu werden, und einen Hacken (33) vorne, wobei der Hacken (33) integral von der Basis (31) gebogen ist um in eine Kupplungsöffnung (11) des Karosserieblech (10) zu passen, wobei der Hacken (33) nach oben geneigt gebogene Innenwände (34) in der einander zugewandten Richtung ausgehend von den gegenüberliegenden lateralen Seiten von der Basis (31), nach unten geneigt gebogene Aussenwände (36) in der einander gegenüberliegenden Richtung ausgehend von den beiden Oberseiten der Innenwände (34), und nach unten geneigt gebogene Eingriffselemente (38) in gegenseitig zugewandten Richtungen von den unteren Enden der Aussenwände (36) aufweist, die besagte Befestigungsklammer ist **dadurch gekennzeichnet, dass**
die Innenwände (34) an ihren Unterteilen mit ausgeschnittenen Öffnungen (35) gebildet sind, welche jeweils eine bestimmte Fläche haben, an den Positionen, welche der an den unteren Enden der Aussenwände (36) gebildeten Eingriffselemente (38) entsprechen, so dass die Eingriffselemente (38) in geschrumpfter Stellung einfach in die Kupplungsöffnungen (11) des Karosserieblechs (10) passen, ohne mit den Innenwänden (34) zu interferieren, zum Zeitpunkt des Einsetzens der Befestigungsklammer in die Kupplungsöffnung (11); zusätzlich ist eine Öffnung in jeder Wand (36) zwischen den Eingriffselementen (38) gebildet.

2. Befestigungsklammer mit Zusatzgriff gemäss Anspruch 1, wobei die Eingriffselemente (38) mit längsverlaufenden Sickennuten (39) gebildet sind.

3. Befestigungsklammer mit Zusatzgriff gemäss Anspruch 1 oder 2, wobei in der Basis (31) Bewegungsanschläge (32) an der vorderen beziehungsweise hinteren Position des Hakens (33) angeordnet sind, um an der Innenwandfläche der Kupplungsöffnung (11) von dem Karosserieblech (10) zum Zeitpunkt der Montage gefasst zu werden, und wobei Führungsteile (32a), welche in der gegenseitig zugewandten Richtung geneigt gebogen sind, in den Oberteilen der Bewegungsanschläge (32) gebildet sind, um den Hacken (33) ebenfalls zum Zeitpunkt der Montage in einer bestimmten Position in die Kupplungsöffnung (11) zu führen.

## Revendications

1. Clip de fixation de manche auxiliaire pour garniture de toit modulaire d'un automobile comprenant une base (31) au fond, la base étant adaptée pour être assemblée entre un panneau de carrosserie (10) et une garniture de toit (20) d'un automobile, et un crochet (33) étant fléchi de manière solidaire à l'avant à partir de la base (31) pour engager dans une ouverture de couplage (11) du panneau de carrosserie (10), le crochet (33) comprenant des parois internes (34) étant fléchies vers le haut de manière inclinée dans une direction opposant l'une à l'autre, en partant des côtés latéraux opposés de la base (31), des parois externes (36) étant fléchies vers le bas de manière inclinée dans une direction opposant l'une à l'autre, en partant des deux parties supérieures des parois internes (34), et engageant des membres (38) étant fléchis vers le bas dans des directions mutuellement faisant face depuis les parties terminales inférieures des parois externes (36), ledit clip étant **caractérisé en ce que** les parois internes (34) étant formées dans leurs parties inférieures avec des ouvertures découpées ayant chacune une superficie donnée à des positions correspondantes desquelles des ouvertures les membres (38) sont formées aux extrémités inférieures des parois extérieures (36) de sorte à ce que les membres (38) engageants peuvent être, en posture rétrécie, facilement engagés dans l'ouverture de couplage (11) du panneau de carrosserie (10), sans interférer avec les parois internes (34) au moment d'insertion du clip dans l'ouverture de couplage (11) du panneau de carrosserie (10) ; de plus une ouverture étant formée dans chaque paroi (36) entre les membres (38) engageants.

2. Un clip de fixation de manche auxiliaire selon la revendication 1, dans lequel les membres (38) engageants sont formés avec des rainures longitudinales de bourrelet (39).

3. Un clip de fixation de manche auxiliaire selon la revendication 1 ou 2, dans lequel dans la base (31), des arrêts de mouvement (32) sont disposés aux positions avant et arrière du crochet (33), respectivement, pour être attrapés sur la surface de paroi interne de l'ouverture de couplage (11) du panneau de carrosserie (10) au moment de l'assemblage, et les parties guidantes (32a) étant fléchies de manière inclinée dans des directions mutuellement faisant face sont formées dans les parties supérieures des arrêts de mouvement (32), de sorte à guider le crochet (33) dans une position donnée dans l'ouverture de couplage (11) aussi au moment de l'assemblage.
